# EUROPEAN PATENT SPECIFICATION

(11) **EP 1 335 130 B1**
(45) Date of publication and mention of the grant of the patent: **08.08.2007**
(21) Application number: 03002460.8
(22) Date of filing: 05.02.2003
(51) Int. Cl.: F03D 3/06, F03D 11/02

(54) **Darrieus wind turbine**
Darrieus Windturbine
Eolienne du type Darrieus

(30) Priority: 07.02.2002 IT MO20020025
(43) Date of publication of application: 13.08.2003
(73) Proprietor: Micali Baratelli, Enrica, 00189 Roma (IT); Fiorini, Maria Cecilia, 00191 Roma (IT); Fiorini, Fabio, 44100 Ferrara (IT)
(72) Inventor: Fiorini Vittorio,, 00189 Roma (IT)
(74) Representative: Jorio, Paolo

(56) References cited:
- DE-A- 19 528 862
- GB-A- 700 879
- GB-A- 2 186 033
- US-A- 3 918 839
- US-A- 5 499 904
- US-B1- 6 343 474

## Description

The invention concerns energy-generating means, particularly generating means suitable for converting the wind's kinetic energy into another form of energy, for example mechanical or electric energy.

Darrieux wind-powered generators are known, which are provided with two or more blades that extend around a shaft that is arranged vertically. The blades, which may be internally hollow for reasons connected with the reduction of inertia, may be rotated by the wind that touches them and in turn rotate the rotor of a current generator that transforms the wind's kinetic energy into electric energy.

A wind-powered Darrieus generator according to the state of the art is known from US 54 99 904.

Prior-art generators with a vertical axis have a disadvantage that is connected with their rather low inefficiency, which significantly limits their applications.

A further disadvantage of the prior-art generators consists of the actuation difficulty that occurs at low wind speeds: if the wind intensity is too low to turn the blades by overcoming the air friction it is virtually impossible to start up traditional Darrieux generators.

One aim of the invention is to improve the energy-generating means, particularly the generating means suitable for converting the wind's kinetic energy into another form of energy.

A further aim of the invention is to increase the efficiency of the prior-art energy-generating means.

Yet another further aim of the invention is to provide energy-generating means, particularly of the wind-powered type, that can be easily actuated even when the wind blows at relatively low speeds.

According to the invention, energy-generating means is provided, particularly of the wind-powered type, comprising two blades that can be rotatably actuated, said blades being internally provided with conduit means, characterised in that, distribution means is further provided, said distribution means being suitable for selectively feeding said conduit means with a fluid coming from an external environment and circulating in a set circulation direction.

In one advantageous embodiment, the blades comprise nozzle means arranged for enabling said fluid to flow out from the conduit means towards the outside environment.

Owing to the invention, it is possible to improve the efficiency of the energy-generating means, particularly of the wind-powered type, inasmuch as in addition to the driving action of the wind that directly hits the blades and makes them rotate, as occurs in traditional wind-driven generators, there is the action of supercirculation of the fluid. Said fluid, after entering the conduit means by means of the distribution means, leaves the conduit means through the nozzle means and adheres to the aerodynamic profiles of the blades due to the Coanda effect. This enables the lift force of the blades to be increased and the driving torque created by the energy-generating means to be thereby increased.

In a further advantageous embodiment, the generating means further comprises flowability enhancing means that is arranged inside said blades to enable the fluid to flow out easily through the nozzle means.

Preferably, the flowability enhancing means has a circular cross section and is made of a material with a low coefficient of friction, particularly polytetrafluoroethylene.

Owing to the shape and material of the flowability enhancing means, said fluid can flow out of the nozzle means without encountering excessive resistance, which would cause harmful losses of energy.

In a yet further advantageous embodiment the generating means comprises flow-conveying means arranged inside the blades to convey said fluid towards parts of the nozzle means located at different heights.

The flow-conveying means enables the route irregularities that fluid directed towards the nozzle means encounters inside the blades to be minimised. Furthermore, it enables the nozzle means to be fed in a substantially uniform manner along its entire extension, i.e. at whatever height said nozzle means may be located.

In a preferred embodiment, the blades comprise wall means, suitable for identifying in the conduit means external conduit means and internal conduit means.

The fluid is preferably introduced into the internal conduit means when the latter faces a direction of origin of the fluid and when the internal conduit means is so arranged that the wall means is substantially at right angles to said direction of origin.

Again preferably, the fluid is inserted into the external conduit means when the latter is opposed to said direction of origin of the fluid and when the external conduit means is so arranged that the wall means is substantially at right angles to said direction of origin of the fluid.

Accordingly, owing to the distribution means, the external conduit means and the internal conduit means can be selectively fed according to the position occupied by the blades in relation to the direction of origin of the fluid, i.e. in relation to the direction wherein the wind blows. This enables the laminar boundary layer outside the blades to be altered in such a way that the efficiency of the energy-generating means is significantly improved.

In a further preferred version, the distribution means comprises radial divider means that is suitable for identifying sector means inside the distribution means.

In a yet further preferred embodiment, the sector means comprises first sector means and second sector means.

The first sector means is advantageously externally delimited by a portion of cylindrical surface, and is internally delimited by a portion of curved surface.

Also advantageously, the second sector means is internally delimited by a further portion of curved surface, and is externally delimited by a portion of frusto-conical surface.

The particular geometry of the surfaces that delimit the first sector means and the second sector means facilitates the introduction of the fluid into the conduit means and reduces load losses. The efficiency of the energy-generating means is thus further increased.

In a further preferred version, the generating means further comprises fan means that is suitable for conveying said fluid inside the distribution means.

Owing to the fan means, the start-up difficulties of the generating means can be overcome even if the wind is not very intense. In fact, the fan means enables pressurised fluid to be conveyed inside the conduit means, and said fluid causes the blades to rotate, thereby overcoming air resistance even when the low wind intensity would by itself not suffice to enable the blades to be rotatably actuated.

The invention will be better understood and carried out with reference the enclosed drawings, which illustrate some exemplifying and not restrictive embodiments thereof, wherein:
Figure 1 is an exploded perspective view of energy-generating means according to the invention;
Figure 2 is a perspective view from above of a lower portion of the generating means of Figure 1;
Figure 3 is a partial and interrupted section of a top portion of the generating means of Figure 1, taken along a vertical plane containing the Z axis;
Figure 4 is a half-section taken along the plane IV-IV of Figure 3;
Figure 5 is an interrupted perspective view of a connecting zone between the blades and the shaft with which the generating means of Figure 1 is provided;
Figure 6 is a perspective view of distribution means with which the generating means of Figure 1 is provided;
Figure 7 is a diagrammatic section taken along a horizontal plane containing the X axis of Figure 1;
Figure 8 is an enlarged transverse section of one of the blades of Figure 7;
Figure 9 is an interrupted diagrammatic section of a blade developed in a plane, said section being taken along the plane IX-IX of Fig. 7.

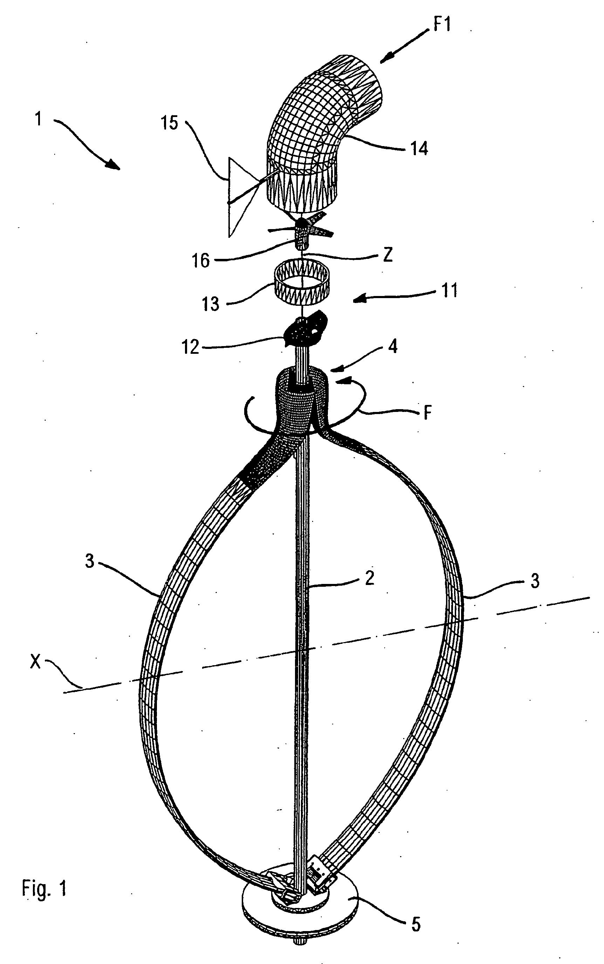

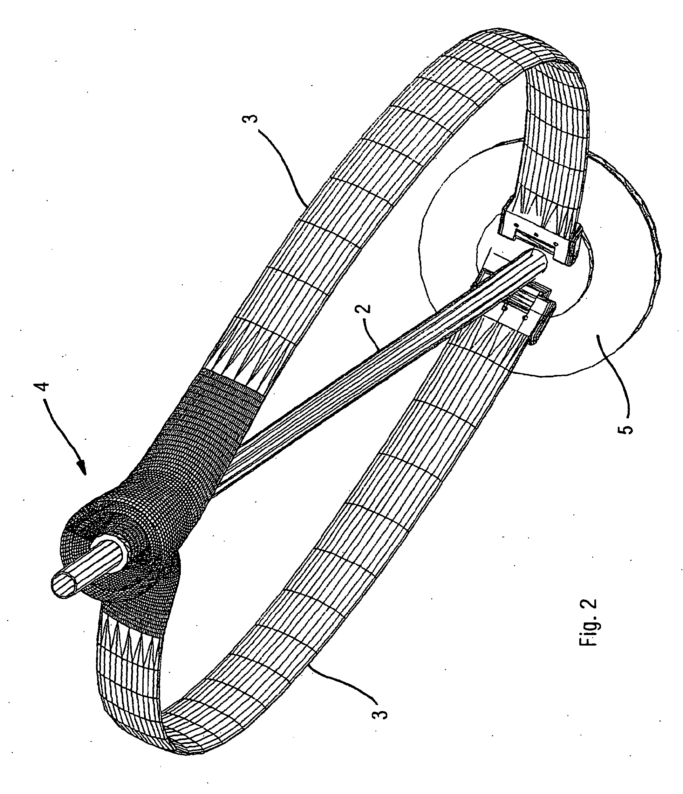

Figures 1 and 2 show a wind-powered Darrieux generator 1, provided with a shaft 2 that extends around a vertical axis Z, to which two diametrically opposite blades 3 are connected. Tie blades 3 can be rotatably actuated by the wind. The blades 3 branch off at the top from the shaft 2 at a connecting zone 4, and are fixed at the bottom to a plate 5 connected to the shaft 2, according to the typical configuration of the Darrieux rotors.

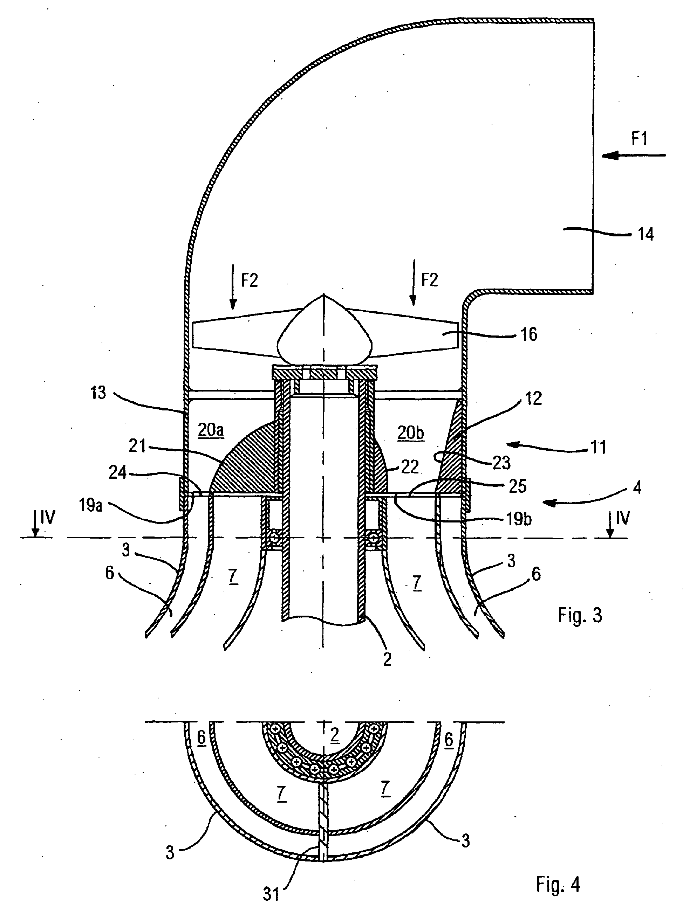

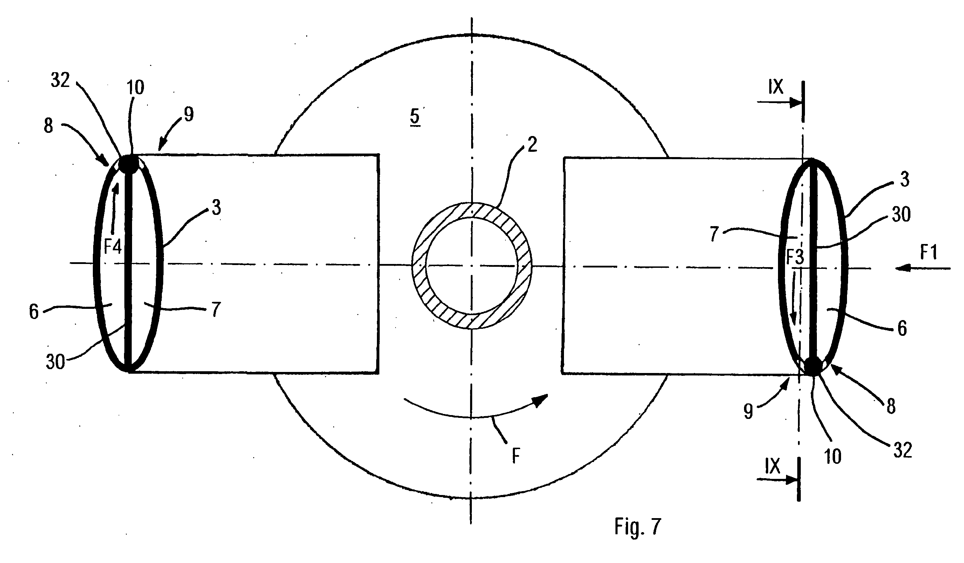

As shown more clearly in Figures 3, 4, 5 and 7, the blades 3 are internally hollow and each one is provided with an internal wall 30 that identifies in each blade 3 an external conduit 6 and an internal conduit 7, arranged respectively on the external and internal side of the blades 3 in relation to the vertical axis Z. Near the connecting zone 4, the blades 3 are shaped according to a circular half-crown geometry and are connected to one another along a straight section 31. The external conduits 6 and internal conduits 7 of each blade 3 communicate with the external environment by means of respective external nozzles 8 and internal nozzles 9, for example slit nozzles, arranged on the outlet edge 10 of the blades 3, in relation to the rotation direction of the blades 3 shown by the arrow F.

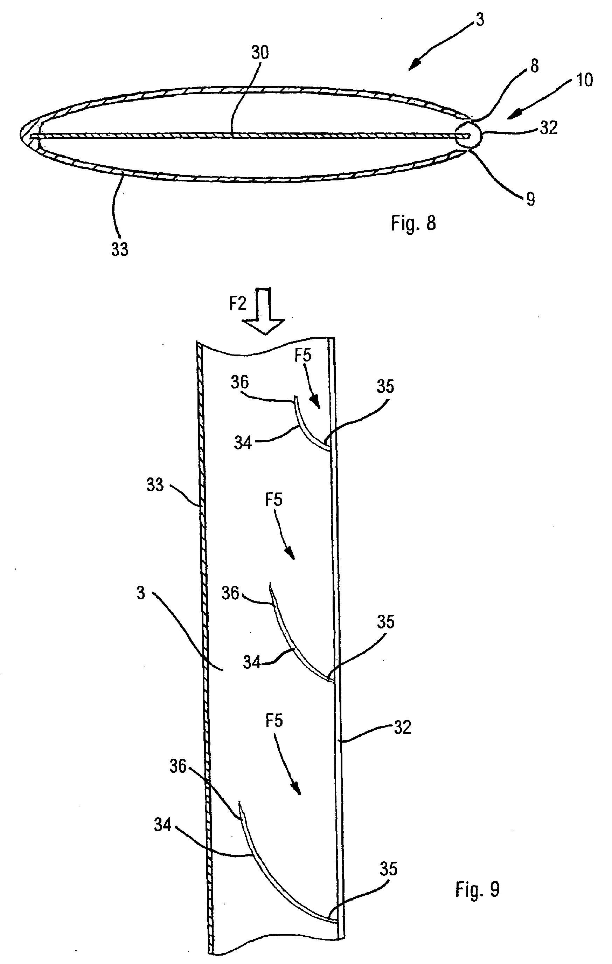

As Figure 8 shows, the external nozzles 8 and internal nozzles 9 are delimited near the outlet edge 10 of each blade 3 by flowability enhancing means, comprising a circular cross section member 32 made of a material with a low coefficient of friction, for example polytetrafluoroethylene (Teflon). The cross section free of sharp edges and the material with a low coefficient of friction of the member 32 facilitate the passage of the air through the external nozzles 8 and the internal nozzles 9 towards the outside environment.

The external profile 33 of the blades 3 is preferably made of fibre glass reinforced plastic or carbon fibre reinforced plastic, so as to combine high mechanical properties, in particular strength, with low inertia. The internal wall 30 can be obtained from a small metal or plastic plate.

As shown in Figure 9, inside the blades 3 flow conveying means is further provided, comprising a plurality of curved laminas 34 with a plan-view geometrical shape that is approximately in the form of a circular arch with the concave part pointing towards the inlet of the air flow. Each lamina 34 comprises a connecting region 35 arranged near the circular cross section member 32, and an end zone 36.

The laminas 34 have dimensions that increase progressively in the circulation direction of the air F2, in such a way that the entering air flow, during its travel inside the blades 3, first encounters laminas 34 with end zones 36 that are relatively near the circular cross section member 32, and subsequently laminas 34 with end zones 36 that are further from said member 32.

Thus, the entry air flow is subdivided into a plurality of flows, indicated by the arrows F5, that flow out from the blades 3 at different heights due to the differing dimensions of the laminas 34. In particular, the portions of entry flow arranged near the circular cross section member 32 are conveyed by the laminas 34 of smaller dimensions, i.e. by the first laminas 34 that the air flow encounters when entering the blades 3 and therefore are the first to flow out from the blades 3 at relatively high heights.

On the other hand, the portions of entry flow further from the circular cross section member 32, which do not interfere with the laminas 34 of smaller dimensions, are conveyed by the last laminas 34 that the air flow meets circulating in the blades 3, i.e. by the laminas 34 of larger dimensions and then are the last to flow out from the blades 3, at relatively low heights.

The curved laminas 34 enable a uniform distribution of the air flow inside the blades 3, thereby ensuring that the air passes through the entire extension of the external nozzles 8 and internal nozzles 9, whatever their height.

Above the blades 3 distribution means 11 is arranged that comprises a cylindrical containing body 13 and a central body 12 that is fixed to an air-inlet port 14. The latter can be pointed in the direction of the wind by means of a rudder 15, i.e. an aerodynamic surface that arranges itself parallel to the wind direction, in such a way that the air directly enters the air-inlet port 14.

Upstream of the distribution means 11 a fan 16 is inserted, that is driven by not shown actuation means and is suitable for conveying air inside the distribution means 11, and subsequently inside the external conduits 6 and internal conduits 7 made in the blades 3.

Depending on wind conditions, the fan 16 can be actuated at different speeds or not be actuated at all. The fan 16 enables operation of the generator 1 not to be interrupted even if wind speed is low or if gusts of wind at high speeds are followed by moments of calm. Furthermore, the fan 16 enables the generator 1 to be actuated even when the wind, blowing at low speeds, would not on its own be sufficient to overcome the air friction to make the blades 3 rotate.

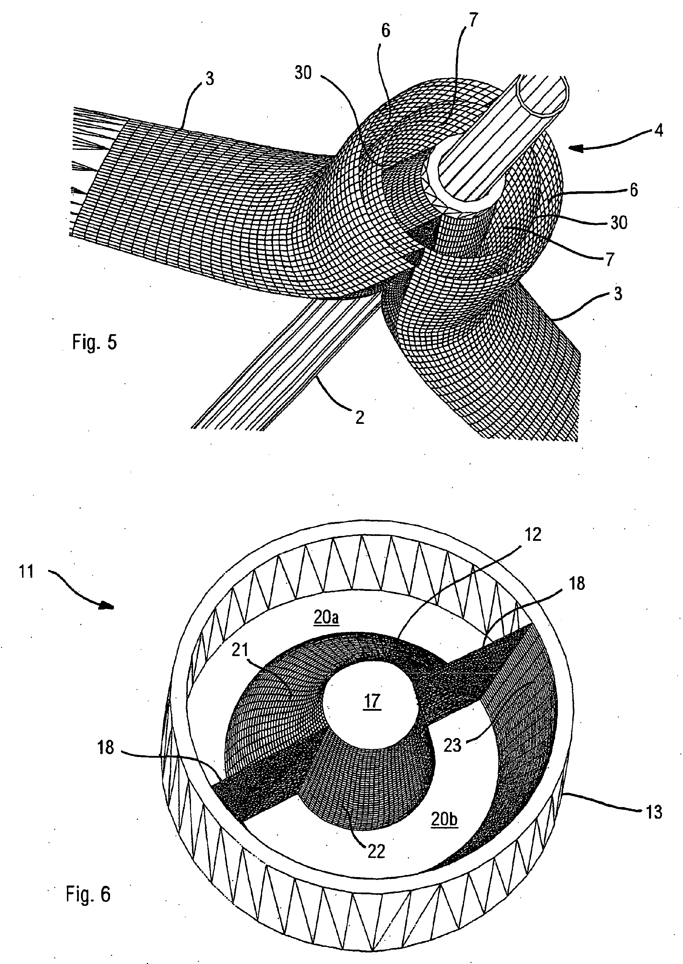

The structure of the distributing means 11 is shown in detail in Figures 3 and 6. As can be seen, inside the container body 13, which has a substantially hollow cylindrical shape, the central body 12 is arranged, which is provided with a central hole 17 for the passage of the shaft 2. From the central hole 17 two diametrically opposite radial dividers 18 develop, that identify inside the distribution means 11 a first sector 20a and a second sector 20b, both of which converge in the direction of the circulating air, shown by the arrows F2. Both the first sector 20a and the second sector 20b have the plan-view shape of a semicircular crown. The first sector 20a is delimited externally by the containing body 13 and internally by a portion of curved surface 21 that develops from the central hole 17. The second sector 20b is internally delimited by a further portion of curved surface 22 that develops from the central hole 17, and externally by a portion of frusto-conical surface 23, that develops from the containing body 13. The geometry of the surfaces that delimit the first sector 20a and the second sector 20b, and in particular the geometry of the portion of curved surface 21, of the further portion of curved surface 22 and of the portion of frusto-conical surface 23 enables the passage of air from the distribution means 11 to the external conduits 6 and internal conduits 7 of the blades 3 to be optimised so as to minimise pressure drops.

The first sector 20a and the second sector 20b terminate, in the direction of air circulation indicated by the arrows F2, with a first outlet section 19a and with a second outlet section 19b respectively, which are proportioned in such a way as to respectively coincide with the entry areas 24 of the external conduits 6 and with the further entry areas 25 of the internal conduits 7 provided in the blades 3.

During operation, the rudder 15 arranges itself in the direction of the wind, which is indicated by arrow F1, so that the air inlet port 14, which is opposite the rudder 15, directly receives the air moved by the wind. The central body 12 of the distribution means 11, which is one with the air-inlet port 14 and therefore with the rudder 15, is consequently arranged with the radial dividers 18 perpendicular to the wind direction F1.

The angular arrangement of the distribution means 11 is furthermore such that when, during rotation around the vertical axis Z, the blades 3 are in a configuration wherein the internal walls 30 are substantially perpendicular to the wind direction F1, the distribution means 11 feeds, by means of the second sector 20b, only the internal conduit 7 of the blade 3 which is upwind, i.e. on the side from which the wind blows and, by means of the first sector 20a, only the external conduit 6 of the blade 3 that is downwind, i.e. on the side that is opposite side to the side from which the wind blows.

In other words, each time that the blades 3, during rotation around the Z axis, reach a configuration wherein the internal walls 30 of said blades are substantially at right angles to the wind direction F1 (configuration wherein it is possible to fully exploit the kinetic energy possessed by the wind), the air that enters through the air-inlet port 14 is divided into two flows F3 and F4 which, owing to the special conformation of the distribution means 11, flow out respectively from the internal nozzles 9 of the blade 3 that is upwind and from the external nozzles 8 of the blade 3 that is downwind. Flows F3 and F4 leaving the blades 3 modify the laminar boundary layer near the aerodynamic profiles of the blades, thereby increasing the efficiency of the wind-powered generator 1.

## Claims

1. A wind-powered Darrieus generator (1) **characterized by** comprising blades (3) each of these is internally provided with an external conduit (6) and an internal conduit (7), and distribution means (11) for selectively feeding said conduits (6,7) with a fluid coming from an external environment; each of said blades (3) comprising a plurality of nozzles (8,9) for enabling said fluid to flow out from said conduits (6, 7) towards said external environment.

2. A wind-powered Darrieus generator according to claim 1, **characterized in that** said distribution means (11) comprise an air-inlet port (14) provided with a rudder (15) for positioning the air entrance of the air-inlet port (14) facing towards the wind.

3. A wind-powered Darrieus generator according to claim 2, **characterized in that** said distribution means (11) comprise a central body (12) provided with a central hole (17) for the housing of a shaft (2) and two inlets (20a, 20b) for feeding said external conduit (6) and an internal conduit (7) respectively; both two inlets (20a, 20b) have a plan-view shape of a semicircular crown and converge in the direction of the circulating air.

4. A wind-powered Darrieus generator according to claim 3, **characterized in that** each of said blades (3) comprises a flowability enhancing means (32) for enabling said fluid to easily flow out through said nozzles (8, 9)

5. A wind-powered Darrieus generator according to claim 4, **characterized in that** said flowability enhancing means comprise a circular cross section member (32) made of a material with a low coefficient of friction and located along an outlet edge (10) between a line of internal nozzles (8) and a line of external nozzles (9).

6. A wind-powered Darrieus generator according to claim 5, **characterized in that** each of said blades (3) comprises flow conveying means (34) located in said external conduit (6) and in said internal conduit (7).

7. wind-powered Darrieus generator according to claim 5, **characterized in** the said flow conveying means (34) comprise a plurality of curved laminas (34).

8. A wind-powered Darrieus generator according to claim 7, **characterized in that** said curved laminas (34) have a plan-view geometrical shape that is approximately in the form of a circular arch with the concave part pointing towards an inlet of the air flow.

9. A wind-powered Darrieus generator according to claim 8, **characterized in that** curved laminas (34) in a single conduit (6, 7) have dimension that increase progressively in the circulation direction of the air.

10. A wind-powered Darrieus generator according to anyone of the previous claims, **characterized by** comprising fan means (16), suitable for conveying said fluid inside said distribution means (11).

11. A wind-powered Darrieus generator according to anyone of the previous claims, **characterized in that** said blades (3) have an external profile (33) made of glass fiber, or of carbon fiber reinforced plastic.

## Patentansprüche

1. Windangetriebener Darrieus Generator (1), **dadurch gekennzeichnet, dass** er Flügel (3) aufweist, die jeweils im Innern über einen äußeren Kanal (6) und einen inneren Kanal (7) verfügen, und dass Verteilungsmittel (11) zum selektiven Speisen der Kanäle (6, 7) mit einem Fluid vorgesehen sind, das von einer externen Umgebung herrührt, wobei die Flügel (3) mit einer Vielzahl von Düsen (8, 9) versehen sind, um es dem Fluid zu ermöglichen, aus den Kanälen (6, 7) zur externen Umgebung zu fließen.

2. Windangetriebener Darrieus Generator nach Anspruch 1, **dadurch gekennzeichnet, dass** die Verteilungsmittel (11) einen Lufteinlassanschluss (14) aufweisen, der mit einem Ruder (15) versehen ist, um den Lufteintritt des Lufteinlassanschlusses (14) in den Wind auszurichten.

3. Windangetriebener Darrieus Generator nach Anspruch 2, **dadurch gekennzeichnet, dass** die Verteilungsmittel (11) einen zentralen Körper (12) mit einer mittigen Öffnung (17) für das Gehäuse einer Welle (2) und zwei Einlässe (20a, 20b) für das Speisen des äußeren Kanals (6) und des inneren Kanals (7) aufweisen, wobei die beiden Einlässe (20a, 20b) einen halbkreisförmigen Grundriss aufweisen und in Richtung der zirkulierenden Luft zusammenlaufen.

4. Windangetriebener Darrieus Generator nach Anspruch 3, **dadurch gekennzeichnet, dass** jeder der Flügel (3) Mittel zur Strömungsverbesserung (32) aufweist, um es dem Fluid zu gestatten, leicht durch die Düsen (8, 9) zu strömen.

5. Windangetriebener Darrieus Generator nach Anspruch 4, **dadurch gekennzeichnet, dass** die Mittel zur Strömungsverbesserung ein Bauteil (32) mit einem kreisförmigen Querschnitt aufweisen, das aus einem Material mit einem niedrigen Reibungskoeffizienten hergestellt ist und das entlang einer Auslasskante (10) zwischen einer Reihe von inneren Düsen (8) und einer Reihe von äußeren Düsen (9) angeordnet ist.

6. Windangetriebener Darrieus Generator nach Anspruch 5, **dadurch gekennzeichnet, dass** jeder der Flügel (3) strömungsfördernde Mittel (34) aufweist, die im äußeren Kanal (6) und im inneren Kanal (7) angeordnet sind.

7. Windangetriebener Darrieus Generator nach Anspruch 5, **dadurch gekennzeichnet, dass** die strömungsfördernden Mittel (34) eine Vielzahl von gekrümmten Platten (34) aufweisen.

8. Windangetriebener Darrieus Generator nach Anspruch 7, **dadurch gekennzeichnet, dass** die gekrümmten Platten (34) im Grundriss eine Geometrie aufweisen, die annäherungsweise die Gestalt eines Kreisbogens mit einem konkaven Teil hat, der in Richtung eines Einlasses der Luftströmung weist.

9. Windangetriebener Darrieus Generator nach Anspruch 8, **dadurch gekennzeichnet, dass** die gekrümmten Platten (34) in einem einzelnen Kanal (6, 7) Ausmaße haben, die in Richtung der Luftströmung zunehmend größer werden.

10. Windangetriebener Darrieus Generator nach einem der vorstehenden Ansprüche, **dadurch gekennzeichnet, dass** sie Gebläsemittel (16) aufweisen, die geeignet sind, das Fluid in das Innere der Verteilungsmittel (11) zu befördern.

11. Windangetriebener Darrieus Generator nach einem der vorstehenden Ansprüche, **dadurch gekennzeichnet, dass** die Flügel (3) ein externes Profil (33) aufweisen, das aus einem mit Glasfasern oder Kohlenstofffasern verstärkten Kunststoff hergestellt ist.

## Revendications

1. Eolienne du type Darrieus (1), **caractérisée par le fait qu'**elle comprend des pales (3), chacune de ces pales étant pourvue à l'intérieur d'un conduit externe (6) et d'un conduit interne (7), et des moyens de distribution (11) pour alimenter de façon sélective lesdits conduits (6, 7) avec un fluide provenant d'un environnement extérieur ; chacune desdites pales (3) comprenant une pluralité d'embouts (8, 9) pour permettre audit fluide de ressortir desdits conduits (6, 7) vers ledit environnement extérieur.

2. Eolienne du type Darrieus selon la revendication 1, **caractérisée en ce que** lesdits moyens de distribution (11) comprennent un orifice d'admission d'air (14) équipé d'un gouvernail (15) pour orienter l'entrée d'air de l'orifice d'admission d'air (14) face au vent.

3. Eolienne du type Darrieus selon la revendication 2, **caractérisée en ce que** lesdits moyens de distribution (11) comprennent un corps central (12) pourvu d'une ouverture centrale (17) pour loger un arbre (2), et deux admissions (20a, 20b) pour alimenter respectivement ledit conduit externe (6) et un conduit interne (7) ; les deux admissions (20a, 20b) ayant une forme, vue du dessus, d'une couronne semi-circulaire et convergeant dans la direction de l'air qui circule.

4. Eolienne du type Darrieus selon la revendication 3, **caractérisée en ce que** chacune desdites pales (3) comprend des moyens d'augmentation d'écoulement de flux (32) pour augmenter le flux dudit fluide sortant par lesdits embouts (8, 9).

5. Eolienne du type Darrieus selon la revendication 4, **caractérisée en ce que** les moyens d'augmentation d'écoulement de flux comprennent un élément (32) de section circulaire réalisé en un matériau ayant un faible coefficient de frottement et disposé le long d'un bord de sortie (10) entre une ligne d'embouts internes (8) et une ligne d'embouts externes (9).

6. Eolienne du type Darrieus selon la revendication 5, **caractérisée en ce que** chacune desdites pales (3) comprend des moyens de transfert de flux (34) disposés dans ledit conduit interne (6) et dans ledit conduit externe (7).

7. Eolienne du type Darrieus selon la revendication 5, **caractérisée en ce que** lesdits moyens de transfert de flux (34) comprennent une pluralité de lamelles incurvées (34).

8. Eolienne du type Darrieus selon la revendication 7, **caractérisée en ce que** lesdites lamelles incurvées (34) ont une forme géométrique, vue de dessus, qui est approximativement celle d'une arche circulaire dont la partie concave est orientée vers une admission du flux d'air.

9. Eolienne du type Darrieus selon la revendication 8, **caractérisée en ce que** les lamelles incurvées (34) dans un conduit (6, 7) ont des dimensions qui augmentent progressivement dans la direction de la circulation de l'air.

10. Eolienne du type Darrieus selon l'une quelconque des revendications précédentes, **caractérisée par le fait qu'**elle comprend des moyens de ventilation (16) servant à transférer ledit fluide à l'intérieur desdits moyens de distribution (11).

11. Eolienne du type Darrieus selon l'une quelconque des revendications précédentes, **caractérisée en ce que** lesdites pales (3) ont un profil externe (33) fait de fibres de verre ou de plastique renforcé avec des fibres de carbone.
